# EUROPÄISCHE PATENTANMELDUNG

(11) **EP 4 190 553 A1**
(43) Veröffentlichungstag der Anmeldung: **07.06.2023**
(21) Anmeldenummer: 21212522.3
(22) Anmeldetag: 06.12.2021
(51) Int. Cl.: B32B 7/023, B32B 27/08, B32B 27/16, B32B 27/30, B32B 27/32, B32B 27/36

(54) **DEKORATIVES LAMINAT UND VERFAHREN ZU SEINER HERSTELLUNG**

(71) Anmelder: SURTECO GmbH, 86647 Buttenwiesen (DE)
(72) Erfinder: Sauler, Marco, 86637 Wertingen (DE); Christoph, Maier, 89438 Holzheim-Eppisburg (DE); Pfeifer, Michael, 86368 Gersthofen (DE)
(74) Vertreter: Cohausz & Florack

(57) **Zusammenfassung**

Die Erfindung betrifft ein dekoratives Laminat umfassend eine erste thermoplastische Polymerfolie und eine zweite transparente thermoplastische Polymerfolie, dadurch gekennzeichnet, dass die erste und die zweite thermoplastische Polymerfolie über eine Lackschicht miteinander verbunden sind, wobei die Lackschicht Metalleffektpigmente enthält. Ferner betrifft die Erfindung ein Verfahren zur Herstellung eines dekorativen Laminats umfassend die folgenden Schritte: a) Bereitstellen einer ersten thermoplastischen Polymerfolie, b) Einseitiges vollflächiges Lackieren der ersten thermoplastischen Polymerfolie mit einem Lack, wobei der Lack Metalleffektpigmente enthält, c) Aufbringen einer zweiten transparenten thermoplastischen Polymerfolie auf den Lack, d) Vollständiges Aushärten des erhaltenen dekorativen Laminats. Schließlich betrifft die Erfindung die Verwendung des erfindungsgemäßen dekorativen Laminats zur Herstellung von Kompaktplatten, Kantenbändern, Fensterprofilen, Türen, Fassadenplatten, Möbeln oder Fußböden.

## Beschreibung

Die Erfindung betrifft ein dekoratives Laminat, ein Verfahren zur Herstellung des dekorativen Laminats sowie die Verwendung des dekorativen Laminats zur Herstellung von Kompaktplatten, Kantenbändern, Fensterprofilen, Türen, Fassadenplatten, Möbeln oder Fußböden.

Dekorative Laminate werden, insbesondere in der Möbelindustrie und im Innenausbau, zur dekorativen Oberflächenbeschichtung von Holzwerkstoffen eingesetzt.

Neben filigranen Dekoren, wie Holzmaserungen und Natursteinimitationen, sind in den letzten Jahren auch vermehrt metallische Oberflächen bei der Möbelherstellung und im Innenausbau gefragt.

Werden Teile im Möbel oder Innenausbau, wie beispielsweise horizontale Arbeitsplatten, vollständig aus Metall gefertigt, so sind diese in der Regel kostenintensiv und/oder weisen, insbesondere für sehr beanspruchte Flächen, nicht die erforderlichen chemischen und/oder mechanischen Resistenzen auf. Dies gilt insbesondere für weiche Metalle wie Aluminium.

Eine Möglichkeit metallische Oberflächen gegenüber äußeren Einflüssen chemisch und/oder mechanisch resistent auszugestalten besteht im zusätzlichen Aufbringen einer Lackschicht auf die metallische Oberfläche. Allerdings ergeben sich hierbei einerseits Schwierigkeiten bei der Lackhaftung andererseits ist es mit den üblichen Lacken nicht möglich die erforderlichen mechanischen und chemischen Resistenzen für besonders beanspruchte Flächen, wie horizontale Arbeitsflächen, zu erreichen.

Alternativ zur Verwendung von Teilen im Möbel oder Innenausbau, die vollständig aus Metall bestehen, wurde zur Kosten- sowie Metallrohstoff-Reduktion bereits vorgeschlagen dekorative Laminate einzusetzen, die eine Metalloberfläche imitieren sollen. Hierbei kommen üblicherweise dekorative Laminate auf Dekorpapierbasis zum Einsatz.

Um eine dekorative metallische Oberfläche auf einem Dekorpapier zu erzeugen, werden Dekorpapiere üblicherweise mit dem Rotationstiefdruckverfahren mittels einer Metallpartikel enthaltenden Druckfarbe vollflächig bedruckt. Auf die bedruckte Oberfläche des Dekorpapiers wird ein transparentes Korund-haltiges Overlay aufgebracht, um die mechanischen Anforderungen von stark beanspruchten Flächen erfüllen zu können. Das Dekorpapier und das Korund-haltige Overlay werden jeweils separat mit einem Kunstharz imprägniert.

Nachteilig an der Verwendung dekorativer Laminate auf Dekorpapierbasis zur Imitation von Metalloberflächen ist, dass die aufgrund der mechanischen Anforderungen erforderliche zusätzliche Verwendung des Korund-haltigen Overlays zu einem milchigen Eindruck des darunterliegenden metallischen Druckbildes führt, so dass derartige dekorative Laminate nicht mit dem optischen Eindruck einer echten metallischen Oberfläche mithalten können.

Alternativ zur Verwendung eines Korund-haltigen Overlays zur Verbesserung der mechanischen Anforderungen von dekorativen Laminaten auf Dekorpapierbasis sind ebenfalls Dekorpapiere bekannt, die aufgrund ihrer Imprägnierung und Lackierung mit einem Elektronenstrahlhärtenden Lack bereits ausreichend gute Oberflächenresistenzen, aufweisen. Nachteilig an diesen dekorativen Laminaten auf Dekorpapierbasis mit ESH-Lack-Imprägnierung ist allerdings ebenfalls, dass der optische Eindruck einer zu imitierenden metallischen Oberfläche noch verbesserungswürdig ist.

Vor dem Hintergrund des Standes der Technik bestand die Aufgabe der Erfindung darin ein dekoratives Laminat bereitzustellen, welches einerseits den geforderten mechanischen und chemischen Resistenzen im Möbel und Innenausbau, insbesondere für besonders beanspruchte Flächen, wie horizontale Arbeitsflächen, genügt und andererseits auch einen verbesserten, einer echten Metalloberfläche möglichst nahekommenden, optischen Eindruck aufweist.

Gelöst wurde diese Aufgabe durch ein dekoratives Laminat umfassend eine erste thermoplastische Polymerfolie und eine zweite transparente thermoplastische Polymerfolie, dadurch gekennzeichnet, dass die erste und die zweite thermoplastische Polymerfolie über eine Lackschicht miteinander verbunden sind, wobei die Lackschicht Metalleffektpigmente enthält.

Überraschend wurde gefunden, dass die Verwendung eines dekorativen Laminats auf Basis von thermoplastischen Polymeren, die über eine Lackschicht, enthaltend Metalleffektpigmente, miteinander verbunden sind, im Vergleich zu dekorativen Laminaten auf Dekorpapierbasis sowohl vergleichbare mechanische und chemische Resistenzen als auch einen deutlich verbesserten, einer echten Metalloberfläche möglichst nahekommenden, optischen Eindruck aufweist.

Das erfindungsgemäße dekorative Laminat umfasst eine erste thermoplastische Polymerfolie.

Als erste thermoplastische Polymerfolie kann erfindungsgemäß grundsätzlich jede dem Fachmann bekannte thermoplastische Polymerfolie eingesetzt werden. Es hat sich als besonders praxisgerecht erwiesen, wenn die erste thermoplastische Polymerfolie ausgewählt ist aus der Gruppe, bestehend aus Polymethylmethacrylat (PMMA)-Folie, Polypropylen (PP)-Folie, Hochdichtes Polyethylen (HDPE)-Folie, Polyethylen niedriger Dichte (LDPE)-Folie, Polyvinylchlorid (PVC)-Folie, Polyethylenterephthalat (PET)-Folie, Rezykliertes Polyethylenterephthalat (R-PET)-Folie oder Glykol modifiziertes Polyethylenterephthalat (PETG)-Folie.

Die erste thermoplastische Polymerfolie weist bevorzugt eine Dicke von 25 bis 350 µm, bevorzugt von 36 bis 100 µm, auf.

Die erste thermoplastische Polymerfolie kann transparent oder intransparent sein. Bevorzugt ist die erste thermoplastische Polymerfolie intransparent. Hierdurch ist vorteilhafterweise die vollständige optische Abdeckung des in der zukünftigen Anwendung zu beschichtenden Holzwerkstoff-Substrats gewährleistet. Die erste thermoplastische Polymerfolie kann Farbpigmente und/oder Farbstoffe enthalten. Die Farbpigmente und/oder Farbstoffe können in einer Menge von 1 bis 5 Gew.-%, bezogen auf das Gesamtgewicht der ersten thermoplastischen Polymerfolie, in der ersten thermoplastischen Polymerfolie enthalten sein.

Darüber hinaus kann die erste thermoplastische Polymerfolie übliche Additive, wie Weichmacher, Füllstoffe, Antioxidantien, Thermostabilisatoren, Vernetzungsadditive, Emulgatoren, Gleitmittel, Antistatika, enthalten.

Das erfindungsgemäße dekorative Laminat umfasst eine zweite transparente thermoplastische Polymerfolie.

Als zweite transparente thermoplastische Polymerfolie kann erfindungsgemäß grundsätzlich jede dem Fachmann bekannte transparente thermoplastische Polymerfolie eingesetzt werden. Es hat sich als besonders praxisgerecht erwiesen, wenn die zweite transparente thermoplastische Polymerfolie ausgewählt ist aus der Gruppe, bestehend aus Polymethylmethacrylat (PMMA)-Folie, Polypropylen (PP)-Folie, Hochdichtes Polyethylen (HDPE)-Folie, Polyethylen niedriger Dichte (LDPE)-Folie, Polyvinylchlorid (PVC)-Folie, Polyethylenterephthalat (PET)-Folie, Rezykliertes Polyethylenterephthalat (R-PET)-Folie oder Glykol modifiziertes Polyethylenterephthalat (PETG)-Folie.

Die zweite transparente thermoplastische Polymerfolie weist bevorzugt eine Dicke von 25 bis 350 µm, vorzugsweise von 36 bis 100 µm auf.

Die zweite transparente thermoplastische Polymerfolie ist transparent. Durch die Transparenz der zweiten thermoplastischen Polymerfolie ist die im dekorativen Laminat darunterliegende Lackschicht, enthaltend Metalleffektpigmente, durch die zweite thermoplastische Polymerfolie hindurch deutlich und klar sichtbar. Im Gegensatz zu Korund-haltigen Overlays, die in dekorativen Laminaten auf Dekorpapierbasis zur Erhöhung der mechanischen Resistenzen zum Einsatz kommen, kommt es in der zweiten transparenten thermoplastischen Polymerfolie nicht zu einer signifikanten Brechung der Wellenlängen des sichtbaren Lichts. Der optische Eindruck des Metalleffekts des dekorativen Laminats ist daher deutlich verbessert.

Die zweite transparente thermoplastische Folie kann übliche Additive, wie Weichmacher, Füllstoffe, UV-Absorber, Flammschutzmittel, Antioxidantien, antimikrobielle Additive, Thermostabilisatoren, Vernetzungsadditive, Emulgatoren, Gleitmittel, Antistatika, enthalten.

Im erfindungsgemäßen dekorativen Laminat sind die erste und zweite thermoplastische Polymerfolie über eine Lackschicht miteinander verbunden, wobei die Lackschicht Metalleffektpigmente enthält.

Im Sinne der Erfindung bedeutet "miteinander verbunden", dass sich die vom dekorativen Laminat umfasste erste und zweite thermoplastische Polymerfolie sowie die Lackschicht, die diese verbindet, nicht mehr zerstörungsfrei voneinander trennen lassen. Eine Verbindung im Sinne der Erfindung setzt nicht notwendigerweise einen vollflächigen Kontakt der Lackschicht zu der ersten und zweiten thermoplastischen Polymerfolie voraus. Es können also zwischen der Lackschicht und der ersten und/oder zweiten thermoplastischen Polymerfolie weitere Schichten vorhanden sein.

Die Lackschicht, die die erste thermoplastische Polymerfolie und die zweite transparente thermoplastische Polymerfolie miteinander verbindet, kann eine Dicke von 5 bis 120 µm, bevorzugt 10 bis 55 µm, aufweisen.

Die Lackschicht, die die erste thermoplastische Polymerfolie und die zweite transparente thermoplastische Polymerfolie miteinander verbindet, kann neben Metalleffektpigmenten ferner Farbpigmente und/oder Farbstoffe enthalten.

Um die Lackhaftung zwischen der strahlengehärteten Lackschicht und der ersten und/oder zweiten thermoplastischen Polymerfolie nochmals deutlich zu verbessern kann mindestens eine Oberfläche, vorzugsweise beide Oberflächen, der ersten und zweiten thermoplastischen Folie eine übliche Oberflächenbehandlung, insbesondere ausgewählt aus der Gruppe bestehend aus Coronabehandlung, Beflammung, Ätzung, Fluorisierung, Aufbringen einer chemischen Extrusionsschicht, Primerung oder Plasmabehandlung, aufweisen.

Die Lackschicht, die die erste und zweite thermoplastische Polymerfolie im erfindungsgemäßen dekorativen Laminat verbindet enthält Metalleffektpigmente. Grundsätzlich sind die dem Fachmann bekannten üblichen Metalleffektpigmente für den Einsatz im erfindungsgemäßen dekorativen Laminat geeignet.

Gemäß einer bevorzugten Ausführungsform der Erfindung sind die Metalleffektpigmente ausgewählt aus der Gruppe, bestehend aus Aluminiumpigmenten, Edelstahlpigmenten, Kupferpigmenten, Messingpigmenten, Kupfer-Zink-Legierungspigmenten, Zinkpigmenten, Perlglanzpigmenten, Goldbronzen, Interferenzpigmenten, synthetischen Glimmern, PVD-Pigmenten oder deren Mischungen. Es hat sich herausgestellt, dass diese Metalleffektpigmente besonders gut geeignet sind um den optischen Eindruck einer reinen Metalloberfläche zu imitieren.

Üblicherweise weist die Lackschicht Metalleffektpigmente in Mengen bis zu 70 Gew.-% bezogen auf das Trockengewicht der ausgehärteten Lackschicht auf. Bevorzugt enthält die Lackschicht zwischen 1 bis 30 Gew.-%, insbesondere 5 bis 15 Gew.-%, Metalleffektpigmente. Die Metalleffektpigmente sind dabei in der Regel plättchenförmig und weisen Durchmesser zwischen 4 und 100 µm, vorzugweise zwischen 5 und 50 µm, auf. Der Durchmesser der Metalleffektpigmente lässt sich gemäß Trockensiebung nach DIN ISO 4497 ermitteln.

Gemäß einer bevorzugten Ausführungsform der Erfindung ist die Lackschicht, die die erste und zweite thermoplastische Polymerfolie miteinander verbindet, eine strahlengehärtete Lackschicht. Grundsätzlich können die dem Fachmann bekannten strahlenhärtenden Lacke für die strahlengehärtete Lackschicht zum Einsatz kommen. Strahlenhärtend im Sinne der Erfindung bedeutet insbesondere, dass der Lack durch die Einwirkung von Elektronenstrahlen (ESH), UV-Strahlung, UV-LED-Strahlung oder Excimer-UV-Strahlung gehärtet wird.

Bevorzugt ist die strahlengehärtete Lackschicht ausgewählt aus der Gruppe bestehend aus Polyacrylat, Polyurethan, Polyurethanacrylat, Polyesteracrylat, Polyetheracrylat, Epoxyacrylat, Siliconacrylat oder Mischungen daraus.

Das erfindungsgemäße dekorative Laminat kann zur weiteren Verbesserung einzelner Eigenschaften, wie mechanischer und/oder chemischer Resistenz und/oder zu dekorativen Zwecken, neben den beiden thermoplastischen Polymerfolien und der dazwischenliegenden Lackschicht weitere Schichten, insbesondere weitere Lackschichten oder dekorative Schichten, aufweisen. Als dekorative Schicht im Sinne der Erfindung ist ein reiner dekorativer Druck, bestehend aus Druckfarbe, zu verstehen. Der dekorative Druck kann mittels gängiger Druckverfahren, wie Tiefdruck, Flexodruck, Siebdruck oder Digitaldruck aufgebracht werden. Eine dekorative Schicht im Sinne der Erfindung ist kein Dekorpapier.

Gemäß einer bevorzugten Ausführungsform der Erfindung trägt die zweite transparente thermoplastische Polymerfolie auf der der Lackschicht zugewandten Seite und/oder auf der der Lackschicht abgewandten Seite einen dekorativen Druck. Durch diese Ausführungsform ist es möglich das dekorative Laminat derart auszugestalten, dass dieses zusätzlich zur metallimitierenden Optik weitere Gestaltungselemente auf der Metall-imitierenden Oberfläche des Lacks, enthaltend Metalleffektpigmente, trägt, die durch die zweite transparente thermoplastische Folie und optional durch eine weitere Lackschicht auf der dem dekorativen Druck abgewandten Seite der transparenten thermoplastischen Folie, vor mechanischer und chemischer Einwirkung geschützt sind.

Um die Resistenz der Oberfläche des dekorativen Laminats vor mechanischer oder chemischer Beanspruchung weiter zu verbessern, kann auf der der Lackschicht abgewandten Seite der zweiten transparenten thermoplastischen Polymerfolie eine weitere Lackschicht vorgesehen sein. Bevorzugt handelt es sich bei der weiteren Lackschicht um eine strahlengehärtete oder säuregehärtete Lackschicht. Dabei kann die strahlengehärtete Lackschicht ausgewählt sein aus Polyacrylat, Polyurethan, Polyurethanacrylat, Polyesteracrylat, Polyetheracrylat, Epoxyacrylat, Siliconacrylat oder Mischungen daraus. Die säuregehärtete Lackschicht kann ausgewählt sein aus wässrigen Dispersionslacken auf Basis von Melamin, Harnstoff und/oder Acrylatharzen.

Üblicherweise liegt die Dicke der weiteren Lackschicht im Bereich von 6 bis 50 µm. Bevorzugt beträgt die Dicke der weiteren Lackschicht 10 bis 35 µm. Es hat sich herausgestellt, dass eine Lackschicht dieser Dicke eine gute Balance zwischen den geforderten mechanischen und chemischen Resistenzen und möglichst geringem Lackauftrag gewährleistet.

Die weitere Lackschicht kann Farbpigmente und/oder Metalleffektpigmente enthalten oder frei von Pigmenten sein. Wenn die weitere Lackschicht Farbpigmente und/oder Metalleffektpigmente enthält, so sind diese üblicherweise in Mengen zwischen 1 und 40 Gew.-% bezogen auf das Trockengewicht der weiteren Lackschicht darin enthalten.

Gemäß einer weiteren Ausführungsform der Erfindung kann zwischen der Lackschicht, die die erste und die zweite thermoplastische Polymerfolie miteinander verbindet, und der zweiten transparenten thermoplastischen Polymerfolie eine Klarlackschicht vorgesehen sein. Die Gesamtdicke des Verbunds aus Klarlackschicht und Lackschicht, enthaltend Metalleffektpigment, kann von 5 bis 120 µm, bevorzugt 10 bis 55 µm, betragen. Eine Klarlackschicht im Sinne der Erfindung enthält keine Metalleffektpigmente.

Ein weiterer Gegenstand der Erfindung ist ein Verfahren zur Herstellung eines dekorativen Laminats umfassend die folgenden Schritte:
a) Bereitstellen einer ersten thermoplastischen Polymerfolie,
b) Einseitiges vollflächiges Lackieren der ersten thermoplastischen Polymerfolie mit einem Lack, wobei der Lack Metalleffektpigmente enthält,
c) Aufbringen einer zweiten transparenten thermoplastischen Polymerfolie auf den Lack,
d) Vollständiges Aushärten des erhaltenen dekorativen Laminats.

Es hat sich herausgestellt, dass das erfindungsgemäße Verfahren zur Herstellung des erfindungsgemäßen dekorativen Laminats auf den üblichen in der Lackproduktion verwendeten Lackiermaschinen kostengünstig durchgeführt werden kann.

Das erfindungsgemäße Verfahren umfasst in Schritt a) das Bereitstellen einer ersten thermoplastischen Polymerfolie. Das Bereitstellen kann dabei mit den dem Fachmann bekannten üblichen Methoden erfolgen. Die erste thermoplastische Polymerfolie kann dabei insbesondere derart ausgestaltet sein, wie dies im Zusammenhang mit dem erfindungsgemäßen dekorativen Laminat oben bereits ausführlich beschrieben wurde.

In Schritt b) des erfindungsgemäßen Verfahrens wird die erste thermoplastische Polymerfolie einseitig vollflächig lackiert. Dabei wird ein Lack verwendet, der Metalleffektpigmente enthält. Der Lack kann ein strahlenhärtender Lack sein. Bevorzugt ist der Lack ausgewählt aus der Gruppe bestehend aus Polyacrylat, Polyurethan, Polyurethanacrylat, Polyesteracrylat, Polyetheracrylat, Epoxyacrylat, Siliconacrylat oder Mischungen daraus. Das einseitig vollflächige Auftragen des Lacks kann dabei mit den in der Lackindustrie üblichen Auftragsmethoden erfolgen. Beispiele für solche Auftragsmethoden sind Sprühen, Walzen, Rollenauftrag, (Gieß)Vorhangbeschichtung, Rakelbeschichtung, CAD Auftragsverfahren. Das einseitig vollflächige Auftragen der Lackschicht kann in einem oder mehreren aufeinanderfolgenden Aufträgen nass-in-nass erfolgen.

Gemäß Schritt c) des erfindungsgemäßen Verfahrens erfolgt das Aufbringen einer zweiten transparenten thermoplastischen Polymerfolie auf den in Schritt b) vollflächig aufgetragenen Lack. Das Aufbringen kann dabei mit den dem Fachmann bekannten Methoden erfolgen. Beispielsweise kann die zweite transparente thermoplastische Polymerfolie kontinuierlich abgerollt und mit der ersten thermoplastischen Polymerfolie mit der darauf aufgebrachten teilweise ausgehärteten Lackschicht zusammengeführt werden. Die zweite transparente thermoplastische Polymerfolie kann dabei derart ausgestaltet sein, wie dies bereits im Zusammenhang mit dem erfindungsgemäßen dekorativen Laminat oben ausführlich beschrieben wurde.

Schließlich erfolgt in Schritt d) des erfindungsgemäßen Verfahrens das vollständige Aushärten des erhaltenen dekorativen Laminats. Bevorzugt erfolgt das vollständige Aushärten in Schritt d) mittels UV-Strahlung, ESH-Strahlung und/oder UV LED-Strahlung. Dabei ist die Lackschicht durch die zweite transparente thermoplastische Polymerfolie hindurch härtbar.

Die finale Dicke der Lackschicht beträgt bevorzugt von 5 bis 120 µm, bevorzugt 10 bis 55 µm.

Gemäß einer bevorzugten Ausführungsförm der Erfindung wird der in Schritt b) einseitig vollflächig aufgetragene Lack zwischen den Schritten b) und c) teilweise ausgehärtet. Bevorzugt erfolgt das teilweise Aushärten des Lacks mittels UV-Strahlung, ESH-Strahlung und/oder UV-LED Strahlung. Teilweises Aushärten im Sinne der Erfindung bedeutet, dass nach dem teilweisen Aushärten ausreichend freie reaktionsfähige Doppelbindungen verbleiben, um das Ausbilden kövalenter Bindungen zur Oberfläche der zweiten transparenten thermoplastischen Polymerfolie und damit eine ausreichende Verbundhaftung des dekorativen Laminats zu gewährleisten. Zudem sollte die Festigkeit des teilweise ausgehärteten Lacks derart gegeben sein, dass ein Aufrollen und Abrollen des Verbunds aus erster thermoplastischer Polymerfolie mit darauf aufgebrachter teilweise ausgehärteter Lackschicht ohne Haftung der Lackschicht an der der Lackschicht abgewandten Seite der ersten thermoplastischen Polymerfolie möglich ist.

Gemäß einer weiteren bevorzugten Ausführungsform der Erfindung erfolgt nach dem Aufbringen einer zweiten transparenten thermoplastischen Polymerfolie in Schritt c) und vor dem vollständigen Aushärten in Schritt d) das Aufbringen mindestens einer weiteren Lackschicht auf der dem Lack abgewandten Seite der zweiten transparenten thermoplastischen Polymerfolie. Die weitere Lackschicht kann dabei derart ausgestaltet sein, wie dies bereits oben im Zusammenhang mit dem erfindungsgemäßen dekorativen Laminat ausführlich beschrieben wurde.

Gemäß einer weiteren bevorzugten Ausführungsform der Erfindung erfolgt nach dem einseitigen vollflächigen Lackieren in Schritt b) und vor dem Aufbringen der zweiten thermoplastischen Polymerfolie in Schritt c) der vollflächige Auftrag einer Klarlackschicht nass-in-nass auf den in Schritt b) aufgebrachten Lack. Die Klarlackschicht ist frei von Metalleffektpigmenten. Der Verbund aus Klarlackschicht und Lack, enthaltend Metalleffektpigment, kann eine Dicke von 5 bis 120 µm, bevorzugt 10 bis 55 µm, aufweisen.

Es versteht sich von selbst, dass das erfindungsgemäße Verfahren alternativ auch derart ausgeführt werden kann, dass die erste thermoplastische Polymerfolie und die zweite transparente thermoplastische Polymerfolie in ihrem Auftreten in den Schritten a) und c) vertauscht werden. Das bedeutet, es kann zunächst in Schritt a) die zweite transparente thermoplastische Polymerfolie bereitgestellt werden, diese in Schritt b) einseitig vollflächig lackiert werden. Anschließend erfolgt das Aufbringen der ersten thermoplastischen Polymerfolie in Schritt c) auf den vollflächig aufgetragenen Lack und das vollständige Aushärten des dekorativen Laminats in Schritt d). Für diese alternative Ausführungsform gilt zu den Ausgestaltungen der einzelnen Schritte und Merkmale das bereits oben im Zusammenhang mit der ersten Alternative des erfindungsgemäßen Verfahrens Gesagte entsprechend. Es ist ferner gemäß einer Ausführungsform der Erfindung denkbar, dass die zweite transparente thermoplastische Polymerfolie vor der Bereitstellung in Schritt a) auf einer Seite mit einem weiteren Lack lackiert wird oder in Schritt b) gleichzeitig mit dem einseitigen vollflächigen Auftrag des Lacks auf der dem Lack abgewandten Seite mit einem weiteren Lack lackiert wird. Die weitere Lackschicht kann dabei derart ausgestaltet sein, wie dies bereits oben im Zusammenhang mit dem erfindungsgemäßen dekorativen Laminat ausführlich beschrieben wurde. Ferner kann auch in der zweiten Variante des erfindungsgemäßen Verfahrens nach Schritt b) das Aufbringen einer Klarlackschicht, auf den vollflächig aufgetragenen Lack erfolgen. Gemäß einer bevorzugten Ausführungsform dieser zweiten Variante des erfindungsgemäßen Verfahrens wird der in Schritt b) einseitig vollflächig aufgetragene Lack zwischen den Schritten b) und c) teilweise ausgehärtet. Bevorzugt erfolgt das teilweise Aushärten des Lacks mittels UV-Strahlung, ESH-Strahlung und/oder UV-LED Strahlung.

Schließlich betrifft die Erfindung auch die Verwendung des erfindungsgemäßen dekorativen Laminats zur Herstellung von Kompaktplatten, Kantenbändern, Fensterprofilen, Türen, Fassadenplatten, Möbeln oder Fußböden.

Wenn hier von Möbeln die Rede ist, so sind damit sowohl übliche Einrichtungsmöbel für Wohnräume, wie Bad, Wohnzimmer, Küche, gemeint als auch Möbel für die Inneneinrichtung von Wohnwagen oder Wohnmobilen.

Üblicherweise werden die dekorativen Laminate auf eine Holzwerkstoffplatte, wie beispielsweise eine Spanplatte, Mitteldichte Holzfaserplatte (MDF), Hochdichte Faserplatte (HDF), Sperrholzplatte oder Grobspanplatte (OSB), unter Zuhilfenahme eines Klebers und mittels Druck und Temperatur oder ohne Kleber unter Verwendung von Druck und Temperatur aufkaschiert. Wenn Kleber zum Einsatz kommen, sind diese üblicherweise ausgewählt aus Polyurethan-Kleber, Phenolharz-Kleber oder Epoxidharz-Kleber.

Sogenannte Continuous Pressure Laminates (CPL) werden üblicherweise bei Temperaturen von 180 bis 200°C und einem Druck von 15-70 bar hergestellt. High Pressure Laminates (HPL) werden üblicherweise bei Temperaturen zwischen 150 und 170°C und einem Druck von 80 bis 100 bar hergestellt. Low Pressure Laminates (LPL) werden üblicherweise bei Temperaturen zwischen 180 und 200°C und einem Druck von 18 bis 28 bar hergestellt.

Die unter Verwendung des erfindungsgemäßen dekorativen Laminats hergestellten Kompaktplatten, Kantenbänder, Fensterprofile, Türen, Fassadenplatten, Möbel oder Fußböden weisen gute mechanische und chemische Resistenzen auf und erfüllen die optischen Anforderungen eines hochwertigen Metallimitats.

Die unter Verwendung des erfindungsgemäßen Laminats hergestellten Kompaktplatten, Kantenbänder, Fensterprofile, Türen, Fassadenplatten, Möbel oder Fußböden weisen insbesondere die folgenden Eigenschaften auf:
- eine Beständigkeit gegen Oberflächenabrieb nach DIN EN 438:2016/W-01302 gekennzeichnet durch einen Anfangsabriebpunkt (in Umdrehungen) ≥ 150, vorzugsweise ≥ 350, und einen Abriebwert (in Umdrehungen) ≥ 350, vorzugsweise ≥ 1000,
- eine Stoßfestigkeit (nach DIN EN 438:2016 in N, ermittelt mit kleiner Kugel) von ≥ 20, vorzugsweise ≥ 25,
- eine Kratzfestigkeit (Bewertungsgrad, ermittelt in Übereinstimmung mit EN 438:1991) von mindestens 3, vorzugsweise 4, insbesondere eine Kratzfestigkeit (nach DIN EN 438:2016/W-01328 in N) > 2, vorzugsweise > 4,
- eine gute chemische Beständigkeit im Kiton-Test (DIN EN 438:2016/W-01327) und Citronensäure-Test (DIN EN 438:2016/W-01321),
- eine gute Lackhaftung ermittelt durch den Gitterschnitt-Test, Tesafilm-Test, Wasserdampf-Test (Beständigkeit gegenüber Wasserdampf nach DIN EN 438:2016/W-01319).
- Verbundhaftung gekennzeichnet durch eine Haftung von zwei Folien nach DIN 55543-5 (Bestimmung der Verbundhaftung) von mindestens 5 N/cm, vorzugsweise 10 N/cm, insbesondere eine Verbundhaftung von >10 N/cm

Nachfolgend wird die Erfindung anhand von Figuren und Beispielen näher erläutert.
- Fig. 1: Schematische Darstellung einer Ausführungsform eines erfindungsgemäßen dekorativen Laminats
- Fig. 2: Schematische Darstellung einer alternativen Ausführungsform eines erfindungsgemäßen dekorativen Laminats

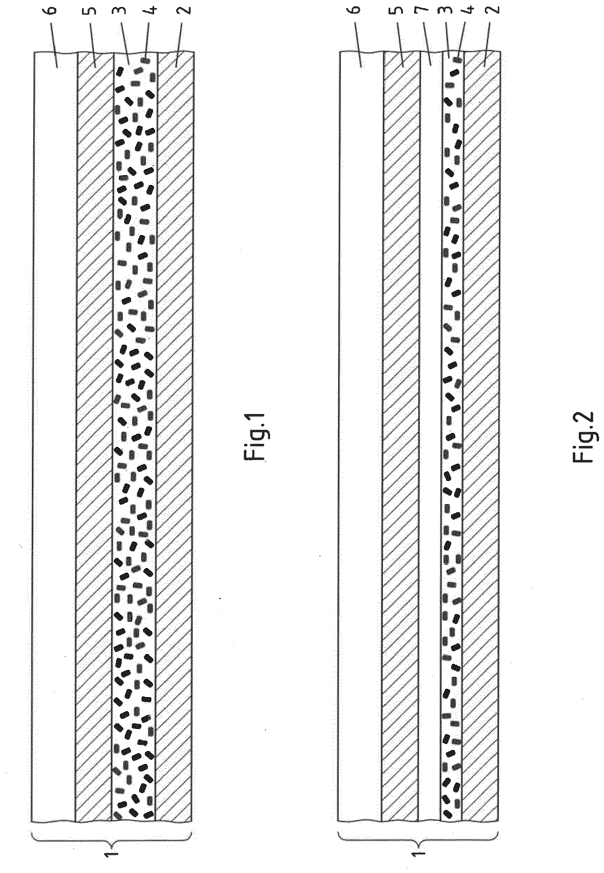

In Figur 1 ist eine Ausführungsform eines erfindungsgemäßen Laminats 1 schematisch dargestellt. In dieser Ausführungsform umfasst das erfindungsgemäße Laminat eine erste thermoplastische Polymerfolie 2. Die thermoplastische Polymerfolie 2 ist in diesem Ausführungsbeispiel eine beidseitig geätzte Polyethylenterephthalatfolie mit einer Dicke von 50 µm. Auf der beidseitig geätzten Polyethylenterephthalatfolie befindet sich eine Lackschicht 3 aus einem strahlengehärteten Polyacrylat, enthaltend Metalleffektpigmente 4. Der Anteil der Metalleffektpigmente beträgt 10 Gew.-% bezogen auf das Trockengewicht der Lackschicht 3. Die Metalleffektpigmente sind Aluminiumpigmente. Auf der Lackschicht 3 befindet sich die zweite transparente thermoplastische Polymerfolie 5. Die zweite transparente thermoplastische Polymerfolie 5 ist eine beidseitig geätzte Polyethylenterephthalatfolie mit einer Dicken von 50 µm. Auf der zweiten transparenten thermoplastischen Polymerfolie 5 befindet sich eine weitere Lackschicht 6 aus strahlengehärtetem Polyacrylat. Die weitere Lackschicht weist eine Dicke von 25 µm auf.

In Figur 2 ist eine alternative Ausführungsform des erfindungsgemäßen Laminats schematisch dargestellt. Gemäß der alternativen Ausführungsform kann das Laminat wie in Figur 1 ausgestaltet sein, mit dem Unterschied, dass zwischen der zweiten thermoplastischen Polymerfolie 5 und der Lackschicht 3 eine Klarlackschicht 7 vorgesehen ist. Wenn eine solche Klarlackschicht 7 vorgesehen ist, so kann die Dicke des Verbundes aus der Klarlackschicht 7 und der Lackschicht 3 der Dicke der Lackschicht 3 in der Ausführungsform ohne Klarlackschicht, die schematisch in Figur 1 dargestellt ist, entsprechen. Diese Dicke liegt üblicherweise im Bereich von 5 bis 120 µm, bevorzugt 10 bis 55 µm.

## Patentansprüche

1. Dekoratives Laminat, umfassend eine erste thermoplastische Polymerfolie und eine zweite transparente thermoplastische Polymerfolie, **dadurch gekennzeichnet, dass** die erste und die zweite thermoplastische Polymerfolie über eine Lackschicht miteinander verbunden sind, wobei die Lackschicht Metalleffektpigmente enthält.

2. Dekoratives Laminat nach Anspruch 1, **dadurch gekennzeichnet, dass** die erste thermoplastische Polymerfolie ausgewählt ist aus der Gruppe, bestehend aus Polymethylmethacrylat (PMMA)-Folie, Polypropylen (PP)-Folie, Hochdichtes Polyethylen (HDPE)-Folie, Polyethylen niedriger Dichte (LDPE)-Folie, Polyvinylchlorid (PVC)-Folie, Polyethylenterephthalat (PET)-Folie, Rezykliertes Polyethylenterephthalat (R-PET)-Folie oder Glykol modifiziertes Polyethylenterephthalat (PETG)-Folie.

3. Dekoratives Laminat nach Anspruch 1 oder 2, **dadurch gekennzeichnet, dass** die Lackschicht eine strahlengehärtete Lackschicht ist.

4. Dekoratives Laminat nach einem der Ansprüche 1 bis 3, **dadurch gekennzeichnet, dass** die Lackschicht ausgewählt ist aus der Gruppe bestehend aus Polyacrylat, Polyurethan, Polyurethanacrylat, Polyesteracrylat, Polyetheracrylat, Epoxyacrylat, Siliconacrylat oder Mischungen daraus.

5. Dekoratives Laminat nach einem der Ansprüche 1 bis 4, **dadurch gekennzeichnet, dass** die Metalleffektpigmente ausgewählt aus der Gruppe, bestehend aus Aluminiumpigmenten, Edelstahlpigmenten, Kupferpigmenten, Messingpigmenten, Kupfer-Zink-Legierungspigmenten, Zinkpigmenten, Perlglanzpigmenten, Goldbronzen, Interferenzpigmenten, synthetischen Glimmern, PVD-Pigmenten oder deren Mischungen.

6. Dekoratives Laminat nach einem der vorhergehenden Ansprüche, **dadurch gekennzeichnet, dass** die zweite transparente thermoplastische Polymerfolie ausgewählt ist aus der Gruppe, bestehend aus Polymethylmethacrylat (PMMA)-Folie, Polypropylen (PP)-Folie, Hochdichtes Polyethylen (HDPE)-Folie, Polyethylen niedriger Dichte (LDPE)-Folie, Polyvinylchlorid (PVC)-Folie, Polyethylenterephthalat (PET)-Folie, Rezykliertes Polyethylenterephthalat (R-PET)-Folie oder Glykol modifiziertes Polyethylenterephthalat (PETG)-Folie.

7. Dekoratives Laminat nach einem der vorhergehenden Ansprüche **dadurch gekennzeichnet, dass** mindestens eine Oberfläche, vorzugsweise beide Oberflächen, der ersten und zweiten thermoplastischen Folie eine Oberflächenbehandlung, insbesondere ausgewählt aus der Gruppe bestehend aus Coronabehandlung, Beflammung, Ätzung, Fluorisierung, Aufbringen einer chemischen Extrusionsschicht, Primerung oder Plasmabehandlung, aufweist/aufweisen.

8. Dekoratives Laminat nach Anspruch 7, **dadurch gekennzeichnet, dass** die zweite transparente thermoplastische Polymerfolie auf der der Lackschicht zugewandten Seite und/oder auf der der Lackschicht abgewandten Seite einen dekorativen Druck trägt.

9. Dekoratives Laminat nach einem der Ansprüche 1 bis 8, **dadurch gekennzeichnet, dass** die zweite transparente thermoplastische Polymerfolie auf der der Lackschicht abgewandteri Seite eine weitere Lackschicht trägt.

10. Dekoratives Laminat nach Anspruch 9, **dadurch gekennzeichnet, dass** die weitere Lackschicht eine strahlengehärtete oder säuregehärtete Lackschicht ist.

11. Dekoratives Laminat nach einem der Ansprüche 9 oder 10, **dadurch gekennzeichnet, dass** die weitere Lackschicht Farbpigmente und/oder Metalleffektpigmente enthält oder frei von Pigmenten ist.

12. Verfahren zur Herstellung eines dekorativen Laminats umfassend die folgenden Schritte:
a) Bereitstellen einer ersten thermoplastischen Polymerfolie,
b) Einseitiges vollflächiges Lackieren der ersten thermoplastischen Polymerfolie mit einem Lack, wobei der Lack Metalleffektpigmente enthält,
c) Aufbringen einer zweiten transparenten thermoplastischen Polymerfolie auf den Lack,
d) Vollständiges Aushärten des erhaltenen dekorativen Laminats.

13. Verfahren nach Anspruch 12, **dadurch gekennzeichnet, dass** nach dem einseitigen vollflächigen Lackieren in Schritt b) und vor dem Aufbringen der zweiten thermoplastischen Polymerfolie in Schritt c) der vollflächige Auftrag einer Klarlackschicht nass-in-nass auf den in Schritt b) aufgebrachten Lack erfolgt.

14. Verfahren nach Anspruch 12 oder 13, **dadurch gekennzeichnet, dass** zwischen Schritt b) und c) ein teilweises Aushärten des Lacks oder des Lacks mit der darauf aufgebrachten Klarlackschicht erfolgt.

15. Verwendung des dekorativen Laminats nach einem der Ansprüche 1 bis 11 zur Herstellung von Kompaktplatten, Kantenbändern, Fensterprofilen, Türen, Fassadenplatten, Möbeln oder Fußböden.
